# EUROPÄISCHE PATENTSCHRIFT

(11) **EP 3 589 711 B1**
(45) Veröffentlichungstag und Bekanntmachung des Hinweises auf die Patenterteilung: **16.02.2022**
(21) Anmeldenummer: 18712090.2
(22) Anmeldetag: 02.03.2018
(51) Int. Cl.: C09J 7/00, C09D 5/20, B65H 18/28

(54) **SEITENPASSIVIERUNG**
SIDE PASSIVATION
PASSIVATION DE FACE LATÉRALE

(30) Priorität: 02.03.2017 DE 102017104408
(43) Veröffentlichungstag der Anmeldung: 08.01.2020
(73) Patentinhaber: Biologische Insel Lothar Moll GmbH & Co. KG, 68723 Schwetzingen (DE)
(72) Erfinder: MITROVIC, Slobodan, 68723 Schwetzingen (DE)
(74) Vertreter: STT Sozietät Thews & Thews
(86) Internationale Anmeldenummer: PCT/EP2018/055168
(87) Internationale Veröffentlichungsnummer: WO 2018/162344

(56) Entgegenhaltungen:
- EP-A1- 1 391 471
- WO-A1-2008/148763
- WO-A1-2016/131984
- WO-A1-2017/108617
- WO-A1-2017/108623
- WO-A2-2012/162640
- US-A- 3 661 840

## Beschreibung

Die Erfindung bezieht sich auf die Verwendung einer Passivierungsschicht zur Passivierung einer ersten Seitenfläche einer Kleberolle, wobei die Herstellung der Passivierungsschicht aus zumindest einer Masse erfolgt, wobei die Masse getrocknet ist und/oder nach einer chemischen Reaktion eine reißfähige Schutzschicht für die erste Seitenfläche der Kleberolle bildet, wobei die Passivierungsschicht derart reißfähig ist, dass nach dem Abrollen eines Klebestreifens die verbleibende Passivierungsschicht nicht an den Seitenflächen der Kleberolle übersteht. Außerdem bezieht sich die Erfindung auf ein Verfahren zur Passivierung einer Seitenfläche einer Kleberolle mit einem Passivierungselement oder mit einer Passivierungsschicht und entsprechende Herstellungsverfahren sowie auf eine entsprechend passivierte Kleberolle.

Die WO 2008/148763 A1 offenbart eine temporäre Beschichtung für ein Fahrzeug bzw. für Fahrzeugkomponenten.

Die EP 1 391 471 A1 offenbart ein Überzugsmittel zum Schutz von hochwertigen Produkten wie z.B. Glas, Metall oder Kunststoff.

Aus der US 3 661 840 A ist ein Maskierungsmittel bzw. eine Flüssigkeit zum Schutz von Metall bekannt.

Die DE 601 18 442 T2 beschreibt ein Verfahren zur Passivierung der Randfläche eines Klebebands. Hierbei wird die Randfläche mit einer flüssigen Zusammensetzung aus Acrylatoligomer und Polyetheracrylatoligomer beschichtet. Zum Beschichten werden insbesondere Tücher, Schwämme, Pinsel oder Walzen angewendet. Auch eine Spritz- oder Tauchbeschichtung ist vorgesehen.

Aus der WO 2016/131984 A1 ist ein Verfahren zur Reduktion der Wickelspiegelklebrigkeit einer Kleberolle bekannt, bei dem eine mit einer Passivierungsschicht versehene Trägerfolie mittels eines Plasmastroms, dem ein Precursor zugesetzt ist, in einer Dicke zwischen 10 nm und 600 nm beschichtet wird, wobei ein Abschnitt der Trägerfolie mit seiner passivierungsbeschichteten Seite auf den Wickelspiegel der Klebebandrolle aufgelegt wird und von dem Trägerfolienabschnitt abgezogen wird.

Der Erfindung liegt die Aufgabe zugrunde, das Passivieren einer Seitenfläche einer Kleberolle einfacher und sicherer durchzuführen sowie gleichzeitig das Passivierungselement zu konfektionieren.

Gelöst wird die Aufgabe erfindungsgemäß durch ein zweistufiges Verfahren, bei dem zunächst die Passivierungsschicht getrennt und ohne Kontakt mit der Kleberolle hergestellt wird und erst nach der Herstellung der Passivierungsschicht ein Teil dieser Passivierungsschicht in seiner Funktion als Passivierungselement auf die Kleberolle aufgebracht wird. Das Verfahren zur Herstellung einer Passivierungsschicht weist folgende Schritte auf: a) Beschichten einer ersten Fläche einer Produktionsunterlage für das Passivierungselement mit der Masse, wobei das Beschichten in einer Dicke zwischen 0,02 mm und 1,5 mm durch eine Spritz-, Tauch- oder Rakelbeschichtung oder in einem Offsetdruck-, Siebdruck-, Tiefdruck- oder Transferdruck-Verfahren erfolgt; b) das zumindest teilweise Trocknen und/oder Aushärten der Schicht zu einer Passivierungsschicht; c) optionales Aufbringen weiterer Schichten auf die jeweils vorher aufgebrachte Schicht entsprechend den Schritten a) und b).Die Passivierungsschicht wird auf einer separaten Produktionsunterlage ohne Kontakt mit der Kleberolle hergestellt. Die Beschichtung der Produktionsunterlage erfolgt hierzu bevorzugt in einem Druckverfahren. Separiert bedeutet, dass es sich bei der Kleberolle und der Produktionsunterlage um zwei unterschiedliche Gegenstände handelt. Somit ist es möglich, die Passivierungsschicht ohne den Einsatz einer Kleberolle auf Vorrat herzustellen, also entsprechend konfektioniert ohne die Produktionsunterlage zu lagern. Vorteilhaft ist weiter, dass die Passivierungsschicht oder das Passivierungselement just in time nach der Herstellung auf die Kleberolle aufgebracht wird. Dabei kann die Passivierungsschicht vorteilhaft als Folie ausgebildet sein, also als ein zu seiner Fläche relativ dünnes Kunststoffelement mit wenigen zehntel Millimeter Dicke.

Die Passivierungsschicht bzw. das Passivierungselement sind trotz ihrer Dicken gut reißfähig, sodass das Klebeband von der beidseitig passivierten Kleberolle abgerollt werden kann und die verbleibende Seitenfläche der Kleberolle weiterhin vollständig mit dem verbleibenden Teil des Passivierungselements geschützt ist. Die Passivierungsschicht reißt nur dort, wo das Klebeband von der Rolle abgelöst wird, ohne dass es sich auf der Rolle selbst löst. An den Rändern des abgerollten Klebestreifens verbleibt entsprechend auch ein sehr dünner Teil der Passivierungsschicht. Nach dem Abrollen des Klebestreifens steht die verbleibende Passivierungsschicht somit nicht an der Seitenfläche der Kleberolle über.

Das Austrocken bzw. die chemische Reaktion findet vollständig oder zumindest vorwiegend auf der Produktionsunterlage statt. Dies ist von Vorteil, da somit Zeit zum Aufbringen der Passivierungsschicht in Form des Passivierungselements auf der Seitenfläche der Kleberolle minimiert werden kann. Ein weiterer Vorteil ist dabei, dass die Haftung des Passivierungselements an der Seitenfläche verstärkt wird, da sich die Passivierungsschicht aufgrund ihrer materiellen Eigenschaften und insbesondere in einem noch nicht vollständig ausgetrockneten Zustand der Struktur der Seitenfläche der Kleberolle noch anpassen kann.

Andererseits ist die vollständige Austrocknung auf der Produktionsunterlage vorteilhaft, wenn die Passivierungsschicht zur Lagerung mitsamt der Produktionsunterlage aufgerollt oder gestapelt wird.

Als Alternative zu einem Auftrag einer flüssigen Masse kann die Masse auch pulverförmig auf die Produktionsunterlage aufgebracht werden und das Verfestigen durch Einwirken von Wärme und Auslösen einer chemischen Reaktion erfolgen. Dabei kann das Pulver in einen Schaum umgewandelt und getrocknet werden. Der Begriff der Masse ist somit weit gefasst, er schränkt die physikalischen Eigenschaften nur insoweit ein, als dass die Masse fließ-, gieß- oder schüttfähig aufgebracht werden kann und das Ausbilden des Passivierungselements bzw. der Passivierungsschicht mit der Masse möglich sein muss.

Das Verfahren zur Herstellung eines Passivierungselements weist an die Herstellung der Passivierungsschicht anschließend folgende vorteilhafte Schritte auf: das Zuschneiden der Passivierungsschicht mit der oder ohne die Produktionsunterlage, sodass ein Passivierungselement entsteht, das von der Produktionsunterlage gelöst werden kann und/oder das Lösen eines Teils der Passivierungsschicht in einer konkreten Form ohne Schneiden von der Produktionsunterlage als Passivierungselement. Je nachdem, ob das Passivierungselement direkt von der Produktionsunterlage auf die Kleberolle aufgebracht oder in einem Zwischenschritt erst zugeschnitten wird, kann eine Beschichtung der Kleberolle just in time und in wenigen Sekunden erfolgen. Durch das Zuschneiden kann das Passivierungselement entweder mit der der Produktionsunterlage gegenüberliegenden Fläche oder mit der auf der Produktionsunterlage haftenden Fläche auf die Kleberolle aufgebracht werden. Wird das Passivierungselement hingegen nicht zugeschnitten und in einer Art Stempelverfahren auf die Seitenfläche aufgedruckt, haftet das Passivierungselement mit der der Produktionsunterlage gegenüberliegenden Fläche an der Kleberolle.

Das Passivierungselement oder die Passivierungsschicht haftet alleine durch Auflegen auf die Seitenfläche der Kleberolle. Diese Haftung wird durch Klebstoff verbessert. Der Klebstoff ist an den Seiten der Kleberolle zusammen mit dem Träger bündig angeschnitten. Zusätzlich tritt durch sogenannten Kaltfluss auch Klebstoff aus der Seite der Kleberolle nach außen aus. Dies ist von Vorteil, da das seitliche Verkleben der Kleberolle aufgrund des Kaltflusses durch das Passivierungselement verhindert wird. Die Kleberolle kann somit beliebig lange gelagert und verwendet werden. Wenn die Haftung des Passivierungselements oder der Passivierungsschicht an der Seitenfläche der Kleberolle stärker ist als an der Produktionsunterlage, kann das Passivierungselement mit Hilfe der Produktionsunterlage auf die Seitenfläche aufgestempelt werden.

Ist auf der Seitenfläche weiterhin das Passivierungselement oder die Passivierungsschicht jeweils mit der Produktionsunterlage aufgebracht, ist dies von Vorteil, da die Produktionsunterlage einen zusätzlichen Schutz für die Seitenflächen darstellt und insbesondere das Passivierungselement oder die Passivierungsschicht vor mechanischen Einwirkungen schützt. So ist es weiterhin vorteilhafterweise möglich, Kleberollen, deren Seitenflächen so passiviert wurden, aufeinander gestapelt zu lagern, ohne dritte Schutzschichten zwischenlegen zu müssen, die das Verkleben der passivierten Seitenflächen aneinander anliegender Kleberollen verhindern sollen.

Vorteilhaft ist die Verwendung eines Passivierungselements oder einer Passivierungsschicht wie zuvor beschrieben zur Passivierung der Seitenfläche von Kleberollen, die im Baubereich Verwendung finden. Gerade im Baubereich werden Kleberollen mit stark haftenden Klebstoffen und relativ dicken Klebeschichten verarbeitet. Durch die relativ dicken Klebeschichten wird der Kaltfluss verstärkt. Die Anwendung im Baubereich ist allerdings nur beispielhaft, prinzipiell kommt die Anwendung für jede Kleberolle in Frage.

Vorteilhaft kann es hierzu auch sein, wenn das Passivierungselement die Form einer Ronde aufweist oder zumindest eine zur Seitenfläche geometrisch ähnliche oder kongruente Form aufweist. Dies bedeutet in vorteilhafter Weise, dass das Passivierungselement aufgebracht auf der Seitenfläche nicht oder zumindest nur minimal übersteht. Somit wird ein Verkleben von weiteren Bereichen der Kleberolle verhindert und Material wird eingespart.

Gegenstand der Lösung ist auch ein Passivierungselement oder eine Passivierungsschicht, wobei das Passivierungselement oder die Passivierungsschicht nicht formstabil, aber selbsttragend und/oder elastisch formbar ist. Ein nicht formstabiler Gegenstand im Sinne der Erfindung verbiegt sich eindeutig sichtbar unter Einwirkung der Gravitation. Selbsttragend bedeutet hier, dass der Gegenstand seine Struktur unter Einwirkung der Gravitation alleine aufrecht erhalten kann und insbesondere nicht spontan reißt. Der elastische Gegenstand dagegen erlaubt eine reversible Dehnung ohne plastische Deformation. Diese Eigenschaften sind vorteilhaft, sowohl für die Konfektionierung als auch für das Aufbringen auf die Kleberolle.

Die Lösung umfasst das Verfahren, bei dem a) das Passivierungselement oder die Passivierungsschicht zusammen mit der Produktionsunterlage als Verbund oder b) das Passivierungselement alleine von der Produktionsunterlage gelöst auf die erste Seitenfläche aufgedrückt und dabei zumindest über Adhäsionskräfte des Passivierungselements oder der Passivierungsschicht mit der Kleberolle verbunden wird. Das Passivieren der ersten Seitenfläche erfolgt somit vorteilhaft in einem Schritt. Damit ist das Verfahren schnell und eine hohe Stückzahl passivierter Kleberollen pro Zeiteinheit wird erreicht.

Ferner kann es vorteilhaft sein, wenn das Verfahren folgende weitere Schritte aufweist: das zur Seitenfläche geometrisch ähnliche oder kongruente Zuschneiden der Passivierungsschicht oder des Passivierungselements alleine. Ferner kann es vorteilhaft sein, wenn das Verfahren zumindest einen der drei folgenden Punkte aufweist: a) die Produktionsunterlage ist beidseitig mit einem Passivierungselement beschichtet, b) das Zuführen von zwei Kleberollen erfolgt gleichzeitig jeweils in einer der beiden Richtungen Y, sodass die beiden Kleberollen gegenüberliegend zur Rollenware angeordnet sind, c) das gleichzeitige Aufdrücken der beiden Kleberollen mit jeweils einer Seitenfläche auf die jeweilige Passivierungsschicht oder das jeweilige Passivierungselement. Dadurch wird eine Serienproduktion der Passivierung möglich.

Hinsichtlich der Herstellung der Passivierungsschicht sind folgende weitere Schritte vorteilhaft: c) das Aufbringen mindestens einer Deckschicht eines von der Masse unterschiedlichen Stoffes auf die Schicht vor oder nach dem zumindest teilweise oder vor dem vollständigen Trocknen und/oder Aushärten der Schicht. Daran schließt sich an das zumindest teilweise Trocknen und/oder Aushärten zumindest einer der Schichten zur Ausbildung einer Verbindung.

Umfasst das Passivierungselement oder die Passivierungsschicht zumindest die Schicht und die Deckschicht, so wird durch das Zusammenspiel derer Materialeigenschatten, insbesondere die Reiß- und Zugfestigkeit, die Reißdehnung und die Elastizität optimiert. Infrage kommen alle Stoffe, insbesondere auch Granulate und Pulver, die keine chemische Reaktion erfahren und auch nicht austrocknen. Diese haften dann zum Beispiel auf der Schicht, wenn diese vor dem Aufbringen vollständig ausgehärtet ist. Das Pulver oder Granulat kann vorteilhafterweise zu einer Vergrößerung der Oberfläche des Passivierungselements bzw. der Passivierungsschicht führen. Besonders vorteilhaft ist es, wenn die Deckschicht vor dem vollständigen Aushärten bzw. Reagieren der Schicht aufgebracht wird. In diesem Fall können insbesondere Granulate und Pulver in die Schicht eindringen. Die Schicht und die Deckschicht können auch aus den gleichen Massen sein. Auf diese Weise kann insbesondere die Stärke der Passivierungsschicht beeinflusst werden. Vorteilhafterweise kann die Stärke der Schichten und der Deckschicht gleich oder auch unterschiedlich sein. Damit lassen sich die Materialparameter weiter optimieren. Zudem könnte diese weitere Deckschicht auch als Aufdruck ausgeführt sein, mit dem Informationen in Form von Bildern und/oder Texten wiedergegeben werden. Dabei dient die Schicht als Trägerschicht für einen Aufdruck.

Das Ausbilden der Deckschicht erlaubt auch die Steuerung der Hafteigenschaften der beiden Seiten der Passivierungsschicht. Vorteilhaft kann es nämlich sein, wenn die Passivierungsschicht oder das Passivierungselement auf der der Produktionsunterlage abgewandten Fläche und/oder auf der der Produktionsunterlage zugewandten Fläche eine selbstklebende Eigenschaft aufweist. Weist die Passivierungsschicht oder das Passivierungselement auf der der Produktionsunterlage abgewandten Fläche selbstklebende Eigenschaften auf, dann klebt sie besser an der Seitenfläche. Weist die Passivierungsschicht oder das Passivierungselement allerdings auf der anderen, gegenüberliegenden Fläche eine selbstklebende Eigenschaft auf, dann klebt sie besser an der Produktionsunterlage. Je nach Anwendungsfall ist beides vorteilhaft. Insbesondere kann, je nach Haftstärke der Kleberolle, durch gezieltes Ausbilden der selbstklebenden Eigenschaften gewährleistet werden, dass das Passivierungselement stärker an der Kleberolle als an der Produktionsunterlage haftet.

Weiterhin vorteilhaft ist die Herstellung einer Passivierungsschicht wie beschrieben, wobei die zumindest mit der Passivierungsschicht beschichtete Produktionsunterlage zu Rollenware aufgerollt wird. Die Lagerung als Rollenware ist vorteilhafterweise besonders platzsparend und weiterhin ist aufgrund des leichten Abrollens der Rollenware auch das Aufbringen an der Seitenfläche bequem möglich.

Ferner kann es vorteilhaft sein, wenn das Passivierungselement oder die Passivierungsschicht im Mittel eine Dicke zwischen 0,02 mm und 1,5 mm, im Besonderen zwischen 0,05 mm und 0,1 mm aufweist. Durch die Dicke des Passivierungselements lassen sich insbesondere die Reißfestigkeit und die Elastizität steuern. Die beanspruchte Dicke verbindet diese Parameter auf besonders vorteilhafte Weise. Auch weitere, dem Fachmann bekannte Materialeigenschaften lassen sich über die Dicke einstellen.

Ferner kann es vorteilhaft sein, wenn das Passivierungselement oder die Passivierungsschicht eine Flächengröße zwischen 50 cm² und 600 cm², im Besonderen zwischen 125 cm² und 175 cm² aufweist. Aufgrund dieser Flächengrößen des Passivierungselements oder der Passivierungsschicht ist es möglich, auf vorteilhafte Art und Weise die Produktion hinsichtlich der Stückzahlen zu optimieren und zusätzlich die Seitenflächen der handelsüblichen Kleberollen in einem Schritt zu passivieren.

Ferner kann es vorteilhaft sein, wenn das Passivierungselement oder die Passivierungsschicht eine jeweils nach DIN EN ISO 527 bestimmte Reiß- oder Zugfestigkeit zwischen 0,01 N/mm² und 10 N/mm² und eine Reißdehnung längs und quer von weniger als 20%, bevorzugt weniger als 5%, aufweist. Diese Materialeigenschaften gewährleisten vorteilhafterweise ein möglichst optimales Reißen der Passivierungsschicht.

Weiterhin kann es vorteilhaft sein, wenn das Passivierungselement auf zumindest einer Seite zumindest teilweise mit einer Farbe bedruckt oder beschichtet ist. Dies ermöglicht insbesondere das Aufbringen von Zeichen, Warnhinweisen und/oder Typenbezeichnungen.

Außerdem kann es vorteilhaft sein, wenn das Verfahren folgende weitere Schritte aufweist: a) das Abrollen der Rollenware in einer Richtung X; b) das Zusammenführen der ersten Seitenfläche mit dem Passivierungselement oder mit der Passivierungsschicht in einer Richtung Y im Wesentlichen rechtwinklig zur Richtung X; c) das Lösen der Kleberolle gemeinsam mit dem Passivierungselement von der Produktionsunterlage; d) das Nachführen der Rollenware in der Richtung X; e) das Wiederholen der Schritte b) bis d) mit weiteren Kleberollen.

Weitere Vorteile und Einzelheiten der Erfindung sind in den Patentansprüchen und in der Beschreibung erläutert und in den Figuren dargestellt. Es zeigt:
- Figur 1a-d: die Herstellung eines Passivierungselements bzw. einer Passivierungsschicht sowie Verfahren zur Passivierung einer Kleberolle;
- Figur 2 I-IV: weitere Verfahren zur Passivierung einer Kleberolle;
- Figur 3: einen Querschnitt durch die Passivierungsschicht bzw. das Passivierungselement mit einer Schicht;
- Figur 4: einen Querschnitt durch die Passivierungsschicht bzw. das Passivierungselement mit zwei Schichten gleicher Stärke;
- Figur 5: einen Querschnitt durch die Passivierungsschicht bzw. das Passivierungselement mit zwei Schichten unterschiedlicher Stärke.
- Figur 6: einen Querschnitt durch die Passivierungsschicht bzw. das Passivierungselement mit einer Deckschicht aus einem Pulver oder Granulat.

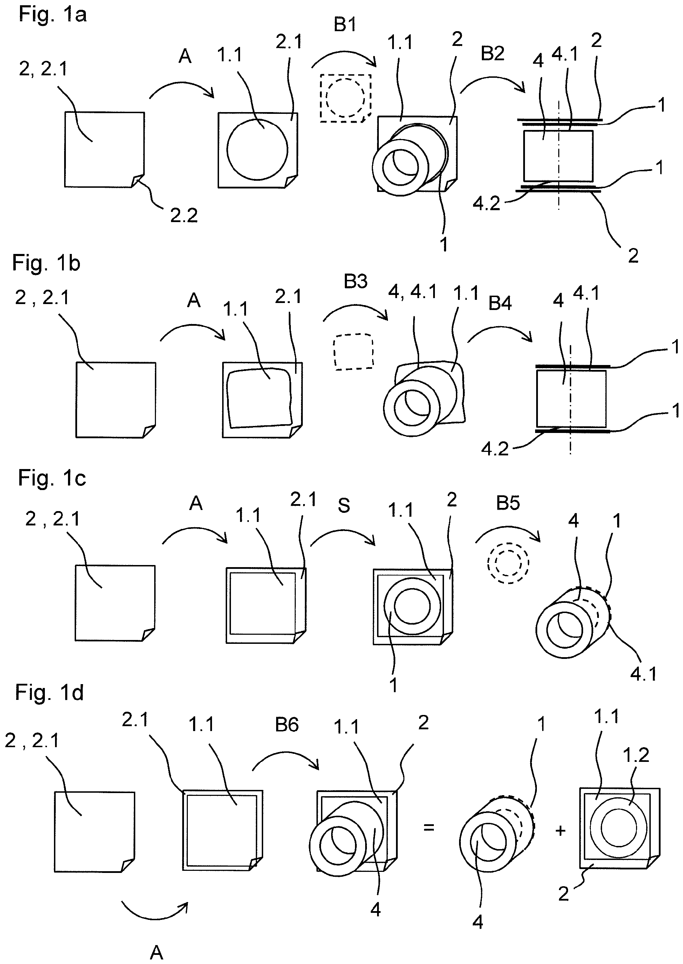

Die in den Figuren 1a bis 1d dargestellten Verfahren zur Herstellung eines Passivierungselements 1 bzw. einer Passivierungsschicht 1.1 für die Passivierung einer Kleberolle 4 unterscheiden sich zunächst darin, wie das Passivierungselement 1 bzw. die Passivierungsschicht 1.1 auf eine erste Seitenfläche 4.1 der Kleberolle 4 aufgebracht wird. In allen Verfahren wird in einem ersten Schritt A gemäß den Figuren 1a bis 1d eine erste Schicht 1a einer viskosen Masse auf einer ersten Fläche 2.1 einer Produktionsunterlage 2 aufgebracht. Die viskose Masse kann auch auf einer zweiten Fläche 2.2 der Produktionsunterlage 2 aufgerollt werden. Diese trocknet und/oder reagiert zumindest teilweise chemisch und bildet dadurch eine Passivierungsschicht 1.1, die auf der Produktionsunterlage 2 haftet, reißfähig ist und elastische Eigenschaften aufweist. Die Form, die die Passivierungsschicht 1.1 dabei auf der Produktionsunterlage 2 bildet, ist je nach Anwendung variabel. Nach Figur 1a ist die Passivierungsschicht 1.1 in Form einer Kreisfläche aufgebracht; nach Figur 1b ist das Passivierungselement 1 geometrisch undefiniert auf die Produktionsunterlage 2 aufgebracht; nach den Figuren 1c und 1d stellt das Passivierungselement 1 wiederum ein Quadrat oder zumindest ein Rechteck dar.

In einem Schritt B1 des Verfahrens nach Figur 1a wird nun die Passivierungsschicht 1.1 mitsamt der Produktionsunterlage 2 auf einer ersten Seitenfläche 4.1 einer Kleberolle 4 aufgelegt. Durch das Auflegen wird eine Haftung der Passivierungsschicht 1.1 an der Kleberolle 4 erreicht. Im darauffolgenden Schritt B2 wird auf eine zweite Seitenfläche 4.2 der Kleberolle 4 gleichermaßen eine Passivierungsschicht 1.1 mit der Produktionsunterlage 2 aufgebracht. In einem darauffolgenden optionalen weiteren, jedoch nicht dargestellten Verfahrensschritt werden die Produktionsunterlagen 2 von der Passivierungsschicht 1.1 abgezogen. Es verbleiben die damit entstandenen Passivierungselemente 1 auf der Kleberolle 4. In den Bereichen, in denen die Passivierungsschicht 1.1 nicht an der Kleberolle 4 haftet, wird sie mit der Produktionsunterlage 2 von der Kleberolle 4 entfernt.

Das Verfahren nach Figur 1b geht hier einen anderen Weg. Anstatt die Passivierungsschicht 1.1 auf die erste Seitenfläche 4.1 aufzulegen, wird diese im Schritt B3 von der Produktionsunterlage 2 getrennt bzw. abgezogen. Durch das Abziehen entsteht ein Passivierungselement 1, das isoliert ohne die Produktionsunterlage 2 verarbeitet wird. Das Passivierungselement 1 ist dabei selbsttragend und haftet an der ersten Seitenfläche 4.1. Zuletzt wird im Schritt B4 die zweite Seitenfläche 4.2 der Kleberolle 4 mit einem ebensolchen Passivierungselement 1 versehen. In einem darauffolgenden optionalen weiteren, jedoch nicht dargestellten Verfahrensschritt werden Bereiche der Passivierungsschicht 1.1, die nicht an der Kleberolle 4 haften, von der Kleberolle 4 entfernt.

Nach Figur 1c wird die Passivierungsschicht 1.1 in Form eines Quadrats auf die Produktionsunterlage 2 aufgebracht. In einem Schritt S nach dem Trocknen und/oder Aushärten wird die Passivierungsschicht 1.1 auf der Produktionsunterlage 2 zugeschnitten. Durch diesen Zuschnitt entsteht das Passivierungselement 1 in Form einer Ronde. Im Schritt B5 wird das Passivierungselement 1 ohne die Produktionsunterlage 2 auf der ersten Seitenfläche 4.1 der Kleberolle 4 aufgebracht. Dieser letzte Schritt wird für die zweite Seitenfläche 4.1 der Kleberolle 4 wiederholt.

In dem in Figur 1d dargestellten Verfahren wird nach dem Schritt A die Kleberolle 4 in Schritt B6 mit ihrer ersten Seitenfläche 4.1 auf die Passivierungsschicht 1.1 aufgelegt. Dabei haftet die Passivierungsschicht 1.1 in dem Bereich der ersten Seitenfläche 4.1 an der Kleberolle 4. Beim Abnehmen der Kleberolle 4 wird die an der Kleberolle 4 haftende Passivierungsschicht 1.1 von der Produktionsunterlage 2 gelöst, wodurch das Passivierungselement 1 entsteht, das an der Kleberolle 4 haftet und wodurch gleichzeitig eine Lücke 1.2 in der Passivierungsschicht 1.1 entsteht. Dieses Verfahren kann als eine Art Stempelverfahren bezeichnet werden, bei dem die Passivierungsschicht 1.1 durch das Aufdrücken und Abheben der Kleberolle 4 von der Produktionsunterlage 2 gelöst wird.

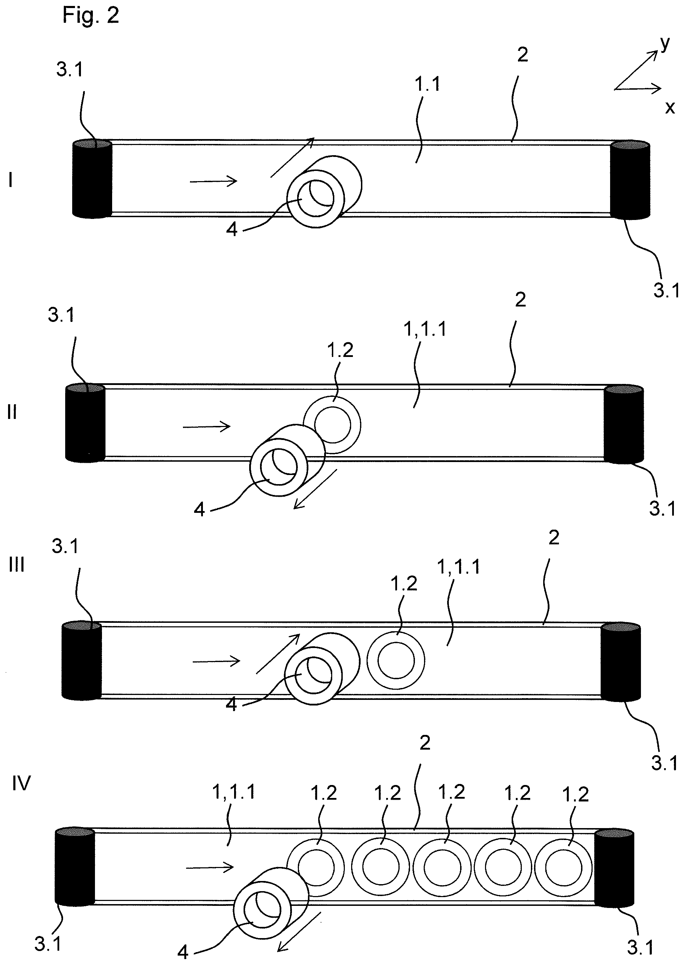

Insbesondere das automatisierte Passivieren von Kleberollen ist mittels eines Verfahrens möglich, das auf das vorstehend beschriebene Verfahren nach Fig. 1d zurückgreift und in Fig. 2 dargestellt ist. Nach dem Schritt I ist die Passivierungsschicht 1.1 auf eine bahnförmige Produktionsunterlage 2 aufgebracht, die als Rollenware 3.1 hergestellt und in einer Richtung X aufgespannt ist. Die Rollenware 3.1 wird links abgerollt und nach der Passivierung rechts aufgerollt. Die Kleberolle 4 wird in einer Richtung Y rechtwinklig zur Richtung X auf die Passivierungsschicht 1.1 aufgedrückt, wodurch die Passivierungsschicht 1.1 im Bereich des Kontakts mit der Kleberolle 4 an der Kleberolle 4 haftet. Nach dem Lösen der Kleberolle 4 von der Produktionsunterlage 2 gemäß Schritt II entsteht eine Lücke 1.2 in der Passivierungsschicht 1.1 in Form des Passivierungselements 1.

Zum Passivieren der nächsten Kleberolle 4 wird die Rollenware 3.1 gemäß Schritt III mindestens um die Breite der Kleberolle 4 in Richtung X nachgeführt und eine weitere Kleberolle 4 der Passivierungsschicht 1.1 zugeführt. Wie in Schritt II gezeigt, wird dann die erste Seitenfläche 4.1 der Kleberolle 4 mit der Passivierungsschicht 1.1 verbunden. Nachdem die Kleberolle 4 gelöst wurde, wird über die Rollenwaren 3.1 die Passivierungsschicht 1.1 bzw. das Passivierungselement 1 in der Richtung X nachgeführt. Auf der ersten Seitenfläche 4.1 der Kleberolle verbleibt das Passivierungselement 1 haftend.

Durch Wiederholen dieser Schritte I bis III entsteht wie in Schritt IV dargestellt eine lückenhafte Passivierungsschicht 1.1, die fortlaufend rechts aufgerollt wird. Das gezeigte Koordinatensystem definiert die Richtungen X und Y und bezieht sich auf sämtliche Verfahrensschritte. Auch wenn die Richtung Y wie hier gezeigt seitlich verläuft, ist im Sinne der Definition auch ein Verlauf nach oben bzw. unten möglich.

Das in Fig. 2 dargestellte Verfahren kann auch mit einer beidseitig beschichteten Produktionsunterlage 2 gleichzeitig von beiden Seiten der Produktionsunterlage 2 erfolgen.

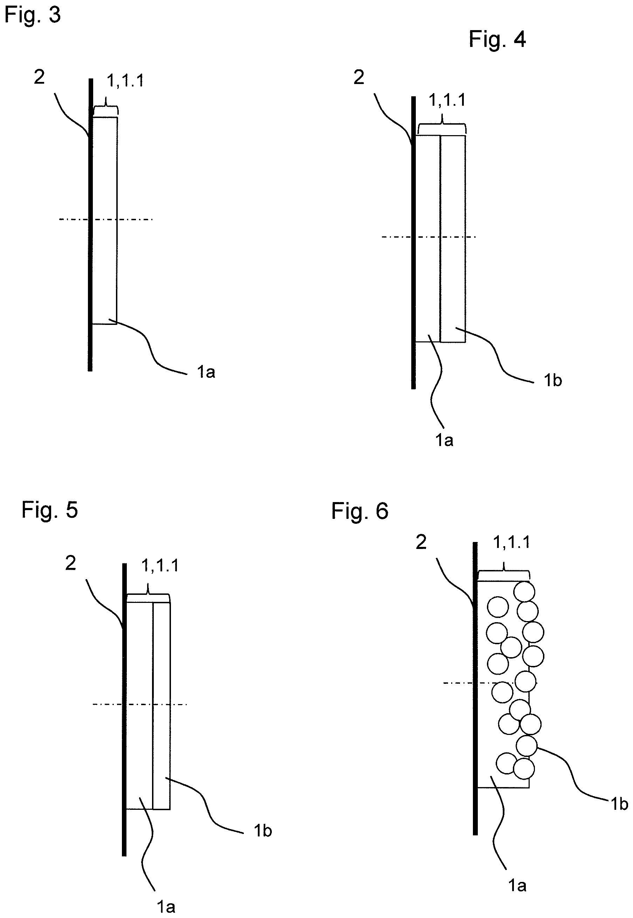

Das Passivierungselement 1 bzw. die Passivierungsschicht 1.1 nach Figur 3 weist eine Schicht 1a der Masse auf, die nach dem Trocknen nicht formstabil, aber selbsttragend ist. Das Passivierungselement 1 bzw. die Passivierungsschicht 1.1 nach den Figuren 4 und 5 weist eine Schicht 1a der Masse und eine Deckschicht 1b eines von der Masse unterschiedlichen Stoffes auf. Beide Schichten 1a, 1b bilden einen Verbund. Beide Schichten 1a, 1b nach Figur 4 sind gleich stark, wohingegen nach Figur 5 die Schichtstärken unterschiedlich sind. So ist die Schicht 1a stärker als die Deckschicht 1b. Nach Figur 6 ist der Stoff der Deckschicht 1b ein nicht aushärtendes und nicht chemisch reagierendes Pulver oder Granulat. Da es vor dem vollständigen Aushärten bzw. chemischen Reagieren der Schicht 1a auf die Schicht 1a aufgebracht wurde, ist es zumindest teilweise in die Schicht 1a eingedrungen. Die Schicht 1a und die Deckschicht 1b bilden einen Verbund.

## Patentansprüche

1. Verwendung einer Passivierungsschicht (1.1) zur Passivierung einer ersten Seitenfläche (4.1) einer Kleberolle (4), wobei die Herstellung der Passivierungsschicht (1.1) aus zumindest einer Masse erfolgt, wobei die Masse getrocknet ist und/oder nach einer chemischen Reaktion eine reißfähige Schutzschicht für die erste Seitenfläche (4.1) der Kleberolle (4) bildet, wobei die Passivierungsschicht (1.1) derart reißfähig ist, dass nach dem Abrollen eines Klebestreifens die verbleibende Passivierungsschicht (1.1) nicht an den Seitenflächen der Kleberolle (4) übersteht, wobei das Herstellungsverfahren folgende Schritte aufweist:
a) Beschichten einer ersten Fläche (2.1) einer Produktionsunterlage (2) für das Passivierungselement (1) mit der Masse, wobei das Beschichten in einer Dicke zwischen 0,02 mm und 1,5 mm durch eine Spritz-, Tauch- oder Rakelbeschichtung oder in einem Offsetdruck-, Siebdruck-, Tiefdruck- oder Transferdruck-Verfahren erfolgt;
b) das zumindest teilweise Trocknen und/oder Aushärten der Schicht (1a) zu einer Passivierungsschicht (1.1).

2. Verwendung der Passivierungsschicht (1.1) zur Passivierung der ersten Seitenfläche (4.1) einer Kleberolle (4) nach Anspruch 1, wobei das Herstellungsverfahren folgende weitere Schritte aufweist:
c) das Aufbringen mindestens einer Deckschicht (1b) eines von der Masse unterschiedlichen Stoffes auf die Schicht (1a) vor oder nach dem zumindest teilweise oder vollständigen Trocknen und/oder Aushärten der Schicht (1a).

3. Verwendung der Passivierungsschicht (1.1) zur Passivierung der ersten Seitenfläche (4.1) einer Kleberolle (4) nach Anspruch 1 oder 2, wobei bei der Herstellung die zumindest mit der Passivierungsschicht (1.1) beschichtete Produktionsunterlage (2) zu Rollenware (3.1) aufgerollt wird.

4. Verwendung eines Passivierungselements (1) nach einem der vorstehenden Ansprüche, wobei das Herstellungsverfahren zumindest einen der folgenden Schritte umfasst:
das Zuschneiden der Passivierungsschicht (1.1) mit der oder ohne die Produktionsunterlage (2) und/oder
das Lösen eines Teils der Passivierungsschicht (1.1) von der Produktionsunterlage (2) als Passivierungselement (1).

5. Verwendung des Passivierungselements (1) oder der Passivierungsschicht (1.1) nach einem der vorangegangenen Ansprüche,
**dadurch gekennzeichnet,**
**dass** das Passivierungselement (1) oder die Passivierungsschicht (1.1) nicht formstabil, aber selbsttragend und/oder elastisch formbar ist.

6. Verwendung des Passivierungselements (1) oder der Passivierungsschicht (1.1) nach einem der vorstehenden Ansprüche,
**dadurch gekennzeichnet,**
**dass** das Passivierungselement (1) oder die Passivierungsschicht (1.1) im Mittel eine Dicke zwischen 0,05 mm und 0,1 mm aufweist.

7. Verwendung des Passivierungselements (1) oder der Passivierungsschicht (1.1) zur Passivierung der ersten Seitenfläche (4.1) einer Kleberolle (4) nach einem der vorstehenden Ansprüche,
**dadurch gekennzeichnet,**
**dass** das Passivierungselement (1) oder die Passivierungsschicht (1.1) eine Flächengröße zwischen 50 cm² und 600 cm², im Besonderen zwischen 125 cm² und 175 cm² aufweist.

8. Verwendung des Passivierungselements (1) oder der Passivierungsschicht (1.1) zur Passivierung der ersten Seitenfläche (4.1) einer Kleberolle (4) nach einem der vorstehenden Ansprüche,
**dadurch gekennzeichnet,**
**dass** das Passivierungselement (1) oder die Passivierungsschicht (1.1) eine jeweils nach DIN EN ISO 527 bestimmte Reiß- oder Zugfestigkeit zwischen 0,01 N/mm² und 10 N/mm² und eine Reißdehnung längs und quer von weniger als 20%, bevorzugt weniger als 5%, aufweist.

9. Verfahren zur Passivierung einer ersten Seitenfläche (4.1) einer Kleberolle (4) mit einem Passivierungselement (1) oder mit einer Passivierungsschicht (1.1) nach einem der vorstehenden Ansprüche 5 bis 8 unter Verwendung des Herstellungsverfahrens nach einem der vorstehenden Ansprüche 1 bis 4, wobei
a) das Passivierungselement (1) oder die Passivierungsschicht (1.1) zusammen mit der Produktionsunterlage (2) als Verbund oder
b) das Passivierungselement (1) alleine von der Produktionsunterlage (2) gelöst auf die erste Seitenfläche (4.1) aufgedrückt und dabei zumindest über Adhäsionskräfte des Passivierungselements (1) oder der Passivierungsschicht (1.1) mit der Kleberolle (4) verbunden wird.

10. Verfahren nach Anspruch 9,
wobei das Verfahren folgende weitere Schritte aufweist:
das zur ersten Seitenfläche (4.1) geometrisch ähnliche oder kongruente Zuschneiden der Passivierungsschicht (1.1) oder des Passivierungselements (1) alleine.

11. Verfahren nach Anspruch 9,
wobei das Verfahren folgende weitere Schritte aufweist:
a) das Abrollen der Rollenware (3.1) in einer Richtung X;
b) das Zusammenführen der ersten Seitenfläche (4.1) mit dem Passivierungselement (1) oder mit der Passivierungsschicht (1.1) in einer Richtung Y im Wesentlichen rechtwinklig zur Richtung X;
c) das Lösen der Kleberolle (4) gemeinsam mit dem Passivierungselement (1) von der Produktionsunterlage (2);
d) das Nachführen der Rollenware (3.1) in der Richtung X;
e) das Wiederholen der Schritte b) bis d) mit weiteren Kleberollen (4).

## Claims

1. A use of a passivation layer (1.1) for passivating a first side surface (4.1) of an adhesive roll (4), the passivation layer (1.1) being produced from at least one composition, the composition being dried and/or forming a tearable protective layer for the first side surface (4.1) of the adhesive roll (4) after a chemical reaction, the passivation layer (1.1) being tearable in such a way that, after an adhesive strip has been unrolled, the remaining passivation layer (1.1) does not project from the side surfaces of the adhesive roll (4), the production method having the following steps:
a) coating, with the composition, a first surface (2.1) of a production support (2) for the passivation element (1), the coating being carried out in a thickness of between 0.02 mm and 1.5 mm by means of a spray, dip or doctor blade coating or in an offset printing, screen printing, gravure printing or transfer printing method;
b) at least partially drying and/or curing the layer (1a) to form a passivation layer (1.1).

2. The use of the passivation layer (1.1) for passivating the first side surface (4.1) of an adhesive roll (4) according to Claim 1, the production method comprising the following further steps:
c) applying, to the layer (1a), at least one top layer (1b) of a substance different from the composition before or after at least partially or completely drying and/or curing the layer (1a).

3. The use of the passivation layer (1.1) for passivating the first side surface (4.1) of an adhesive roll (4) according to Claim 1 or 2, wherein the production support (2) coated at least with the passivation layer (1.1) is rolled up during the production to form rolled material (3.1).

4. The use of a passivation element (1) according to any of the preceding claims, the production method comprising at least one of the following steps:
cutting the passivation layer (1.1) with or without the production support (2) and/or
detaching part of the passivation layer (1.1) from the production support (2) as the passivation element (1).

5. The use of the passivation element (1) or the passivation layer (1.1) according to any of the preceding claims,
**characterised in that**
the passivation element (1) or the passivation layer (1.1) is not dimensionally stable but is self-supporting and/or elastically formable.

6. The use of the passivation element (1) or the passivation layer (1.1) according to any of the preceding claims,
**characterised in that**
the passivation element (1) or the passivation layer (1.1) has an average thickness of between 0.05 mm and 0.1 mm.

7. The use of the passivation element (1) or the passivation layer (1.1) for passivating the first side surface (4.1) of an adhesive roll (4) according to any of the preceding claims,
**characterised in that**
the passivation element (1) or the passivation layer (1.1) has a surface area of between 50 cm² and 600 cm², in particular between 125 cm² and 175 cm².

8. The use of the passivation element (1) or the passivation layer (1.1) for passivating the first side surface (4.1) of an adhesive roll (4) according to any of the preceding claims,
**characterised in that**
the passivation element (1) or the passivation layer (1.1) has a tear or tensile strength determined in each case in accordance with DIN EN ISO 527 of between 0.01 N/mm² and 10 N/mm² and an elongation at break longitudinally and transversely of less than 20%, preferably less than 5%.

9. A method for passivating a first side surface (4.1) of an adhesive roll (4) with a passivation element (1) or with a passivation layer (1.1) according to any of the preceding Claims 5 to 8 using the production method according to any of the preceding Claims 1 to 4, wherein
a) the passivation element (1) or the passivation layer (1.1), together with the production support (2) as a composite, or
b) the passivation element (1) alone, detached from the production support (2), is pressed onto the first side surface (4.1) and, in the process, is connected to the adhesive roll (4) at least via adhesive forces of the passivation element (1) or the passivation layer (1.1).

10. The method according to Claim 9,
the method comprising the following further steps:
cutting the passivation layer (1.1) or the passivation element (1) alone, in a manner geometrically similar to or congruent with the first side surface (4.1).

11. The method according to claim 9,
the method comprising the following further steps:
a) unrolling the rolled material (3.1) in a direction X;
b) bringing together the first side surface (4.1) with the passivation element (1) or with the passivation layer (1.1) in a direction Y substantially perpendicular to the direction X;
c) detaching the adhesive roll (4) together with the passivation element (1) from the production support (2);
d) guiding the rolled material (3.1) in the direction X;
e) repeating steps b) to d) with further adhesive rolls (4).

## Revendications

1. Utilisation d'une couche de passivation (1.1) pour la passivation d'une première surface latérale (4.1) d'un rouleau de bande adhésive (4), dans laquelle la fabrication de la couche de passivation (1.1) est effectuée à partir d'au moins une masse, la masse étant séchée et/ou formant, après une réaction chimique, une couche de protection déchirable pour la première surface latérale (4.1) du rouleau de bande adhésive (4), la couche de passivation (1.1) étant déchirable de telle manière que, après le déroulement d'une bande adhésive, la couche de passivation (1.1) restante ne dépasse pas sur les surfaces latérales du rouleau de bande adhésive (4), le procédé de fabrication comportant les étapes suivantes :
a) revêtement d'une première surface (2.1) d'un support de production (2) pour l'élément de passivation (1) avec la masse, le revêtement étant effectué avec une épaisseur comprise entre 0,02 mm et 1,5 mm par un revêtement par pulvérisation, un revêtement au trempé ou un revêtement à la racle ou selon un procédé d'impression offset, de sérigraphie, d'impression en taille-douce ou d'impression par transfert ;
b) séchage et/ou durcissement au moins partiel de la couche (1a) résultant en une couche de passivation (1.1).

2. Utilisation de la couche de passivation (1.1) pour la passivation de la première surface latérale (4.1) d'un rouleau de bande adhésive (4) selon la revendication 1, dans laquelle le procédé de fabrication comporte les étapes supplémentaires suivantes :
c) application d'au moins une couche de recouvrement (1b) en une substance différente de la masse sur la couche (1a) avant ou après le séchage et/ou le durcissement au moins partiel ou complet de la couche (1a).

3. Utilisation de la couche de passivation (1.1) pour la passivation de la première surface latérale (4.1) d'un rouleau de bande adhésive (4) selon la revendication 1 ou 2, dans laquelle le support de production (2) revêtu au moins avec la couche de passivation (1.1) est enroulé en produit en rouleau (3.1) lors de la fabrication.

4. Utilisation d'un élément de passivation (1) selon l'une quelconque des revendications précédentes, dans laquelle le procédé de fabrication comprend au moins une des étapes suivantes :
coupe de la couche de passivation (1.1) avec ou sans le support de production (2) et/ou détachement d'une partie de la couche de passivation (1.1) d'avec le support de production (2) comme élément de passivation (1).

5. Utilisation de l'élément de passivation (1) ou de la couche de passivation (1.1) selon l'une quelconque des revendications précédentes,
**caractérisée en ce que**
l'élément de passivation (1) ou la couche de passivation (1.1) n'est pas de forme stable, mais est autoporteuse et/ou déformable de manière élastique.

6. Utilisation de l'élément de passivation (1) ou de la couche de passivation (1.1) selon l'une quelconque des revendications précédentes,
**caractérisée en ce que**
l'élément de passivation (1) ou la couche de passivation (1.1) présente en moyenne une épaisseur comprise entre 0,05 mm et 0,1 mm.

7. Utilisation de l'élément de passivation (1) ou de la couche de passivation (1.1) pour la passivation de la première surface latérale (4.1) d'un rouleau de bande adhésive (4) selon l'une quelconque des revendications précédentes,
**caractérisée en ce que**
l'élément de passivation (1) ou la couche de passivation (1.1) présente une aire de surface comprise entre 50 cm² et 600 cm², en particulier entre 125 cm² et 175 cm².

8. Utilisation de l'élément de passivation (1) ou de la couche de passivation (1.1) pour la passivation de la première surface latérale (4.1) d'un rouleau de bande adhésive (4) selon l'une quelconque des revendications précédentes,
**caractérisée en ce que**
l'élément de passivation (1) ou la couche de passivation (1.1) présente une résistance à la déchirure ou à la traction, respectivement déterminée selon DIN EN ISO 527, comprise entre 0,01 N/mm² et 10 N/mm² et un allongement à la rupture, longitudinalement et transversalement, inférieur à 20 %, de préférence inférieur à 5 %.

9. Procédé de passivation d'une première surface latérale (4.1) d'un rouleau de bande adhésive (4) avec un élément de passivation (1) ou avec une couche de passivation (1.1) selon une des revendications précédentes 5 à 8, au moyen du procédé de fabrication selon une des revendications précédentes 1 à 4, dans lequel
a) l'élément de passivation (1) ou la couche de passivation (1.1) est relié(e) au support de production (2) sous la forme d'un composé ou
b) l'élément de passivation (1) est apposé seul, détaché du support de production (2), sur la première surface latérale (4.1) et est alors relié au rouleau de bande adhésive (4) au moins par le biais de forces d'adhésion de l'élément de passivation (1) ou de la couche de passivation (1.1).

10. Procédé selon la revendication 9,
dans lequel le procédé comporte les étapes supplémentaires suivantes :
coupe de la couche de passivation (1.1) ou de l'élément de passivation (1) seul(e) de manière congruente ou géométriquement identique à la première surface latérale (4.1).

11. Procédé selon la revendication 9,
dans lequel le procédé comporte les étapes supplémentaires suivantes :
a) déroulement du produit en rouleau (3.1) dans une direction X ;
b) jonction de la première surface latérale (4.1) avec l'élément de passivation (1) ou la couche de passivation (1.1) dans une direction Y sensiblement perpendiculaire à la direction X ;
c) détachement du rouleau de bande adhésive (4) conjointement avec l'élément de passivation (1) d'avec le support de production (2) ;
d) poursuite du guidage du produit en rouleau (3.1) dans la direction X ;
e) répétition des étapes b) à d) avec d'autres rouleaux de bande adhésive (4).
